# EUROPEAN PATENT SPECIFICATION

(11) **EP 1 104 370 B1**
(45) Date of publication and mention of the grant of the patent: **17.09.2003**
(21) Application number: 99934866.7
(22) Date of filing: 16.07.1999
(51) Int. Cl.: B60T 5/00

(54) **VEHICLE BRAKE DISC COOLING**
KÜHLEINRICHTUNG FÜR EINE FAHRZEUGBREMSSCHEIBE
REFROIDISSEMENT D'UN DISQUE DE FREINAGE DE VEHICULE

(30) Priority: 14.08.1998 GB 9817629
(43) Date of publication of application: 06.06.2001
(73) Proprietor: Bayerische Motoren Werke Aktiengesellschaft, 80788 München (DE)
(72) Inventor: BASNETT, Michael, Neil, Crickhowell Powys NP8 1DS (GB); MacDONALD, Michael, John, Louis, Redditch Worcestershire B98 0HR (GB)
(86) International application number: GB9902308
(87) International publication number: WO00009373

(56) References cited:
- EP-A1- 0 937 633
- DE-A- 1 961 139
- DE-A1- 4 114 761

## Description

This invention relates to motor vehicles and in particular to a cooling arrangement for a disc brake of a motor vehicle.

It is well known to provide a motor vehicle such as a car or truck with a disc brake to apply a braking effect to a road wheel of the motor vehicle. It is further known that the braking effect produced by the brake disc results in heating of the brake disc as kinetic energy is converted into heat. This heating effect can be a problem if the temperature of the disc exceeds a certain temperature as it will result in a reduction of braking effect and in severe cases can result in a total loss of braking effect.

It is known to provide a tube extending from a position adjacent to the brake disc to a position in the air passing by the motor vehicle to provide a ram air cooling effect to the brake disc. Such ram air cooling has been used extensively on racing cars for many years but is only really effective at high forward velocities and results in increased drag on the motor vehicle.

DE-A-41 14 761 discloses a disc brake with an air cooling duct having air feed vanes. The air feed vanes of the disc brake assembly are fitted on a segment-form ridigly installed air deflector which is attached by both ends to the brake anchor plate. The air feed vanes on their edge areas are facing the brake disc and have an air flow divider which extends more or less axially. One end of the deflector lies in the outer perimeter region of the brake disc and the other end is faced to the sidewall of the brake disc, thereby leading cooling air thereto.

It is an object of this invention to provide an improved cooling arrangement for a motor vehicle brake disc.

According to the invention there is provided a motor vehicle comprising at least one wheel rotatably mounted within a wheel cavity defined by a body structure of the motor vehicle, a brake disc connected to said wheel for rotation . therewith, a brake disc calliper to apply a braking effect to said brake disc and a cooling duct for cooling said brake disc characterized in that the cooling duct has a first portion adjacent to the brake disc and a second portion adjacent a tyre forming an outer portion of the wheel such that rotation of the tyre past the second portion causes air to flow through the duct.

Preferably the second portion of the duct is adjacent means defining a channel such that air circulating with the wheel will flow through the channel. Desirably the channel is tapered so as to cause acceleration of air flowing through it.

Said means may be arranged to co-operate with the duct so as to form a venturi pump causing air to be drawn through the duct from the first portion to the second portion. In this case the first portion preferably comprises a collector plate having a lip extending around the periphery of the brake disc.

The cooling member preferably extends substantially vertically from the first portion to the second portion such that heat from the brake disc can cause convection in the cooling duct. This can provide cooling when the wheel is not rotating, i.e. when the vehicle has stopped after braking.

Alternatively the second portion of the duct may include a collector means arranged to channel air into the duct, thereby to urge air through the duct towards the brake disc.

The cooling member is preferably mounted on a part of the suspension or hub assembly which moves vertically with the wheel, such as a suspension strut.

The invention will now be described by way of example with reference to the accompanying drawing of which:
Fig. 1 is a side view of a front part of a motor vehicle according to a first embodiment of the invention:
Fig. 2 is a plan view of the same part of the vehicle shown in Fig. 1;
Fig. 3 is a front view of part of the motor vehicle of Fig. 1 showing a brake cooling arrangement according to the invention;
Fig. 4 is a view in the direction of arrow 'X' on Fig. 3;
Fig. 5 is a horizontal section through part of the arrangement of Fig. 3;
Fig. 6 is a section corresponding to Fig. 5 but through an arrangement according to a second embodiment of the invention.
Fig. 7 is a view similar to that shown in Fig 4 but showing a third embodiment of the invention; and
Fig. 8 is a view in the direction of arrow 'R' on Fig. 7

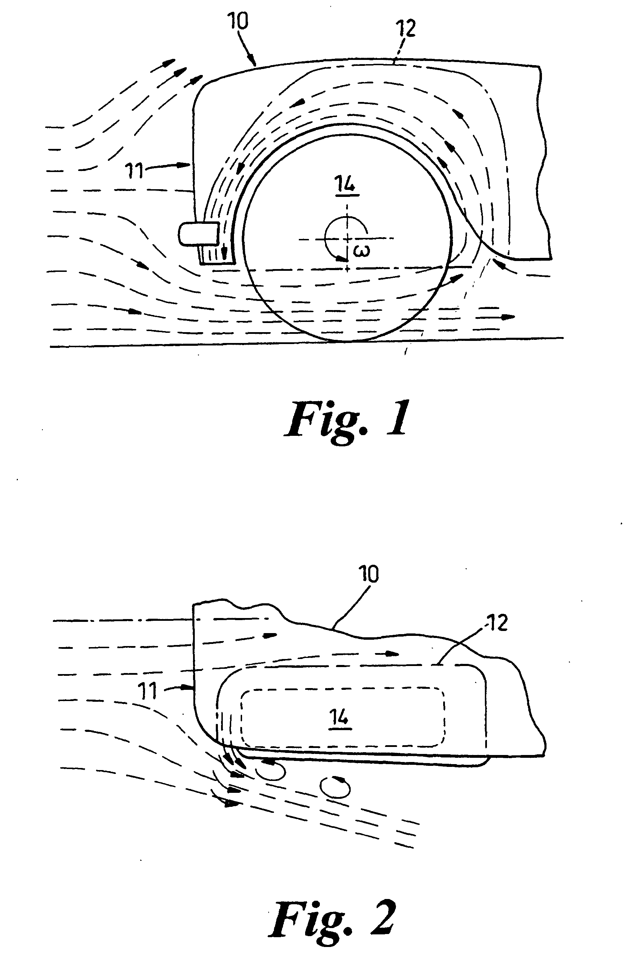

With particular reference to Figs 1 and 2 a motor vehicle 10 has a wheel cover in the form of a front wing 11 defining a wheel cavity 12 in which is rotatably mounted a road wheel 14. During normal forward motion of the motor vehicle 10 the road wheel 14 will rotate in the direction ω as shown on Fig. 1.

This rotation of the wheel produces a complex air flow pattern around the front portion of the motor vehicle 10 but in general terms air is dragged by rotation of the wheel 14 from a position at the back of the wheel 14 over the top of the wheel to a position at the front from where it merges with the air passing by the side of the motor vehicle 10.

In general, the effect of this is that the viscosity of the air produces a boundary layer around the wheel which acts as a large rotating torus of air of varying linear velocity. Adjacent to the surface of the wheel 14 the linear air speed is virtually the same as the linear speed of the wheel, that is to say it is equal to the rotational speed ω multiplied by the radius of the wheel 14, and the linear speed of the air reduces as the distance from the surface of the wheel is increased.

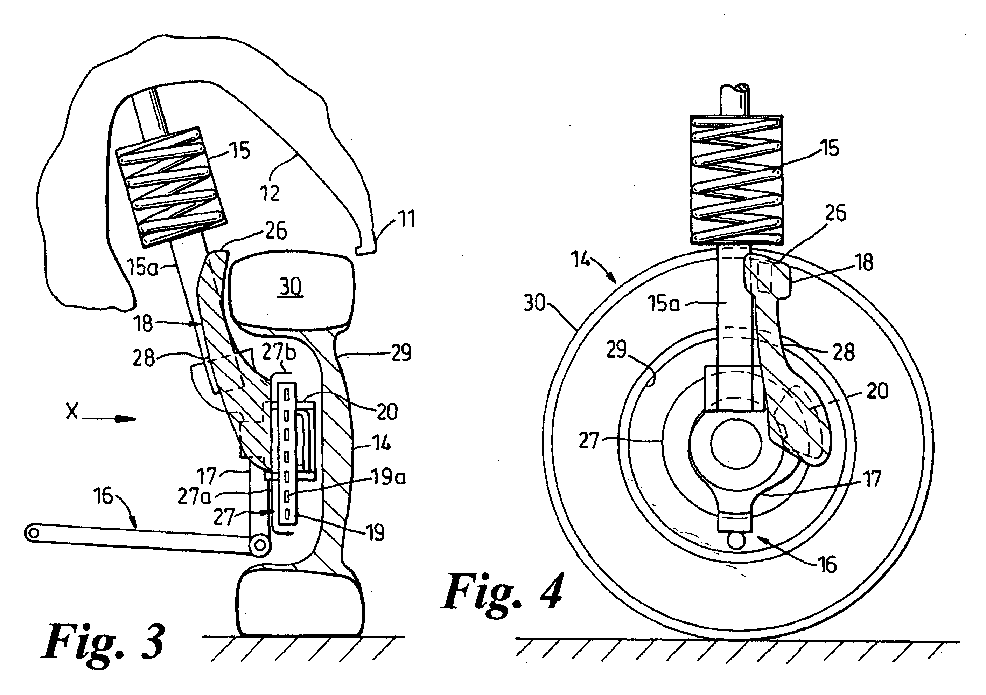

With particular reference to Figs 3, 4 and 5 the front wing 11 defines a wheel cavity in the form of a wheel arch 12. The road wheel 14 has a wheel member 29 and a tyre member 30. The wheel member 29 is rotatably mounted upon a hub forming part of a wheel hub assembly 17. The wheel hub assembly is supported by a suspension strut 15 and a transverse suspension arm 16. A ventilated brake disc 19 is attached to the hub of the wheel hub assembly for rotation therewith. A brake calliper 20 is mounted upon a fixed part of the wheel hub assembly 17 to provide a braking force to the brake disc 19.

A brake cooling member 18 is attached to the lower part 15a of a suspension strut 15, which moves vertically with the wheel 14, by a fixing means (not shown), and extends substantially vertically from an inlet means in the form of a collector plate 27 at its lower end to an outlet means including an extractor funnel 26 at its upper end. The inlet and outlet means 27, 26 are joined by a conduit 28.

The collector plate 27 has an annular central portion 27a that lies close to a side surface of the brake disc 19 and a circumferential lip 27b that extends over the outer peripheral edge of the brake disc 19 for co-operation with radially extending ducts 19a formed within the brake disc 19.

The extractor funnel 26 comprises a tapering funnel portion 26a defining a tapering channel 25 and is situated adjacent to an outlet part 26b forming the top of the conduit 28. The outlet part 26b has an outlet opening 26c which communicates with the tapering channel 25 at a position near to its position 25a of minimum cross-sectional area. The extractor funnel 26 is located in the wheel arch between the body of the vehicle and the tyre, approximately at the highest point of the tyre, and is spaced apart from the tyre 30 by a small distance 'G' but is located as close to the tyre 30 as is possible to maximise the collection of air rotating with the wheel 14.

It will be appreciated that because the brake cooling member is attached to the lower part 15a strut 15 it will rise and fall with the wheel 14 and that therefore the collector plate 27 and extractor funnel 26 will remain fixed in relation to the axis of rotation of the wheel 14 and brake disc 19.

Operation of the cooling mechanism is as follows. When the vehicle moves in a forward direction the wheel 14 rotates in the direction shown by the arrow ω on Fig. 1 causing the brake disc 19 to be rotated in the same direction due to its attachment to the wheel hub. Rotation of the brake disc 19 causes air to be drawn into the inner end of its radially extending ventilation ducts 19a and thrown outwardly towards the outer periphery of the brake disc 19, the brake disc forming a centrifugal air pump in substantially known manner.

The rotation of the wheel 14 causes the tyre 30 to be'rotated within the wheel arch 12 causing air to be rotated in the same direction as the wheel 14. Some of the rotating air is collected by the funnel portion 26a and because of the reducing cross-sectional area of the tapered channel 25 the speed of the air is increased as it travels through the channel 25. At the juncture with the outlet opening 26c of the outlet part 26b the velocity of the air is considerably increased This produces a region of low pressure near the outlet opening 26c which causes air to be sucked out of the outlet opening 26c by a venturi pump effect, thereby creating a flow from the collector plate 27 through the conduit 28. The air flowing through the gap 'G' which is also accelerated also contributes to this pumping effect.

The cooling member 18 therefore acts as a duct taking hot air exiting the outer rim of the brake disc 19 away from the brake disc 19. Because of the flow produced by the cooling member 18 the efficiency of the pumping effect of the brake disc 19 is increased and so the result is that more air is drawn through the ducts 19a for a given rotational speed.

When the wheel stops rotating after a significant brake application the brake disc will still be at a high temperature. Because of the lack of rotating air the venturi pump action will cease. However, because of its vertical orientation, the cooling member then acts as a cooling stack producing a strong convection current up through the conduit 28 which draws air from around the brake disc, and also out through the radially extending ducts 19a in the brake disc 19.

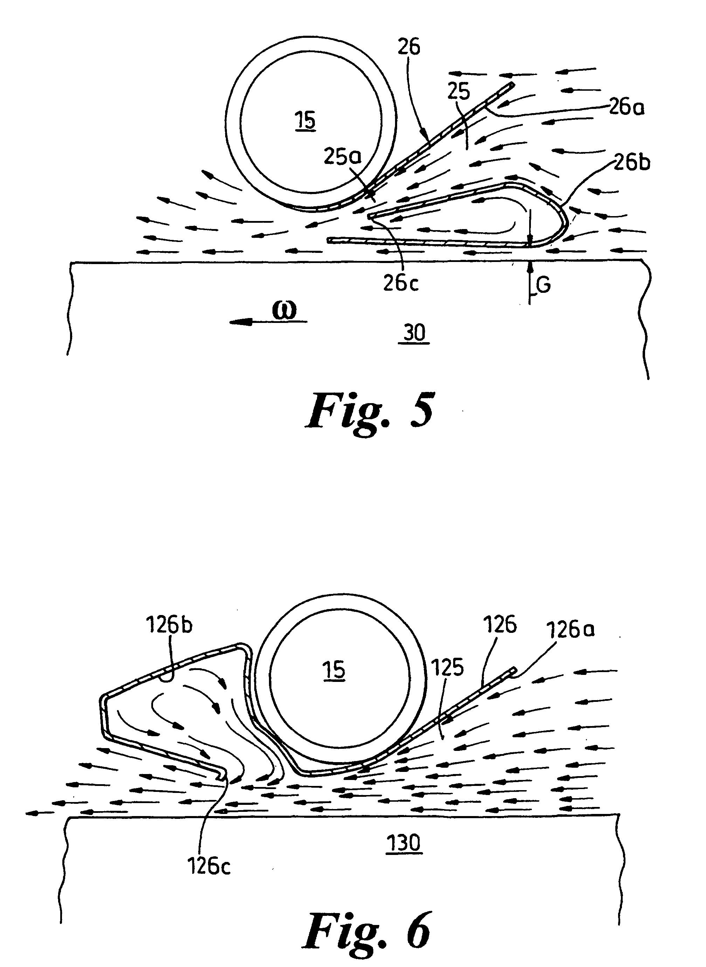

With reference to Fig. 6 a second embodiment of the invention is in many respects the same as the first. Corresponding parts are shown by the same reference numerals preceded by a '1'. The extractor funnel 126 has a funnel portion 126a which, together with the wheel 130, forms a tapered channel 125; and an outlet part 126b which is connected to the channel 125 via an outlet opening 126c. Once again the flow of air through the channel 125 forms a venturi effect sucking air out of the outlet part 126b through the outlet opening 126c. The main difference between this embodiment and the first is that in this case the outlet part 126b is nested in front of the strut 115 rather than behind it.

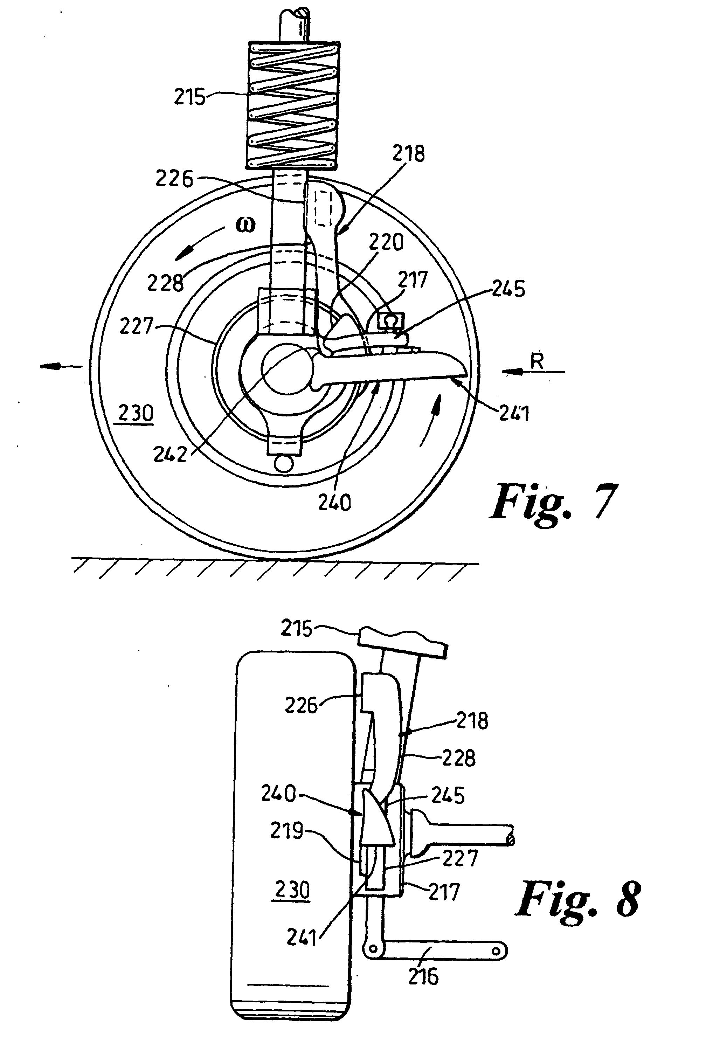

Also according to the invention, either as an alternative to the venturi arrangement described above or in addition to it, the ram effect of the rotating torus of air around the wheel can be used to directly cool the brake disc, using a duct or conduit leading from a position near the tyre to the inner circumference of the brake disc. Figs 7 and 8 show a third embodiment of the invention in which both ram air and suction is used to cool the brake disc. Similar parts to those in the first embodiment have the same reference numeral preceded by a '2'.

The wheel hub assembly 217 is supported by a suspension strut 215 and a transverse suspension arm 216. A ventilated brake disc 219 is attached to the hub of the wheel hub assembly 217 for rotation therewith. A brake calliper 220 is mounted upon a fixed part of the wheel hub assembly 217 to provide a braking force to the brake disc, 219. A brake cooling member 218 is provided corresponding exactly to that shown in Figs. 3 to 5.

An air collector duct 240 extends radially, and approximately horizontally, outwardly from a position adjacent to an inner periphery of the brake disc 219 to a position adjacent a tyre 230, at approximately the rearmost portion of the tyre. The air collector duct 240 has an inlet orifice 241 at its outer end, shaped so as to collect passing air from the torus of air rotating with the wheel, and an outlet orifice 242 at its inner end to supply air from the duct 240 to the centre portion of the brake disc 219.

The air collector duct 240 is circumferentially spaced some distance away from the brake cooling member 218 so as not to interfere with the pumping effect of the cooling member 218. To prevent disruption of the convection flow produced in the cooling member 218 when the vehicle is stationary and the brake disc 219 is at an elevated temperature the air collector duct extends substantially horizontally.

The air collector duct 240 is mounted on a steering arm 245 which is fixed in relation to the hub and therefore also moves vertically with the wheel.

The combination of the brake cooling member 218 and the air collector duct 240 provides a positive pushing and pulling of air through the brake disc 219 and therefore maximises the amount of cooling provided to it.

## Claims

1. A motor vehicle comprising at least one wheel (29) rotatably mounted within a wheel cavity (12) defined by a body structure of the motor vehicle (10), a brake disc (19) connected to said wheel (29) for rotation therewith, a brake disc calliper (20) to apply a braking effect to said brake disc (19) and a cooling duct (18) for cooling said brake disc (19) with a first portion (27) adjacent to the brake disc (19) **characterized in that** the cooling duct (18) has a second portion (26) adjacent a tyre (30) forming an outer portion of the wheel (29) such that rotation of the tyre (30) past the second portion causes air to flow through the duct (28).

2. A motor vehicle as claimed in claim 1
in which the second portion (26) of the duct (18) is adjacent means defining a channel (25) such that air circulating with the wheel (29) or tyre (30) will flow through the channel (25).

3. A motor vehicle as claimed in claim 2
wherein the channel (25) is tapered so as to cause acceleration of air flowing through it.

4. A motor vehicle as claimed in claim 2 or claim 3
in which said means is arranged to co-operate with the duct (18) so as to form a venturi pump causing air to be drawn through the duct (18) from the first portion (27) to the second portion (26).

5. A motor vehicle as claimed in claim 4
in which the first portion (27) comprises a collector plate having a lip (27b) extending around the periphery of the brake disc (19).

6. A motor vehicle as claimed in claims 4 or claim 5
in which the cooling duct (18) extends substantially vertically from the first portion (27) to the second portion (26) such that heat from the brake disc (19) can cause convection in the cooling duct.

7. A motor vehicle according to any of claims 1 to 3
wherein second portion of the duct includes a collector duct (240) arranged to channel air into the duct (240), thereby to urge air through the duct towards the brake disc (219).

8. A motor vehicle according to any of claims 4 to 6
further including a second cooling duct having a collector duct (240) adjacent the tyre (230) of the wheel arranged to channel air into the duct (240), thereby to urge air through the duct towards the brake disc (219).

9. A motor vehicle according to claim 8
wherein the second cooling duct (240) extends substantially horizontally.

10. A motor vehicle as claimed in any preceding claim in which the motor vehicle has a suspension strut (15, 215) to which the cooling duct (18, 218) or one of the cooling ducts, is fastened.

## Patentansprüche

1. Kraftfahrzeug, das mindestens ein Rad (29), das innerhalb eines von einer Karosseriekonstruktion des Kraftfahrzeugs (10) definierten Radausschnitts (12) drehbar montiert ist, eine zwecks gemeinsamer Drehung mit dem Rad (29) verbundene Bremsscheibe (19), einen Bremsscheibensattel (20) zur Ausübung einer Bremswirkung auf die Bremse (19) sowie einen Kühldurchgang (18) zur Kühlung der Bremsscheibe (19) mit einem ersten Abschnitt (27) neben der Bremsscheibe (19) umfaßt, **dadurch gekennzeichnet, daß** der Kühldurchgang (18) einen zweiten Abschnitt (26) neben einem Reifen (30) besitzt, der einen äußeren Abschnitt des Rads (29) bildet, so daß durch vorbei am zweiten Abschnitt erfolgende Drehung des Reifens (30) bewirkt wird, daß Luft durch den Durchgang (28) strömt.

2. Kraftfahrzeug nach Anspruch 1, bei dem der zweite Abschnitt (26) des Durchgangs (18) ein angrenzendes Mittel ist, das einen Kanal (25) definiert, so daß mit dem Rad (29) oder dem Reifen (30) zirkulierende Luft durch den Kanal (25) strömt.

3. Kraftfahrzeug nach Anspruch 2, bei dem der Kanal (25) konisch ausgeführt ist, um eine Beschleunigung der ihn durchströmenden Luft zu bewirken.

4. Kraftfahrzeug nach Anspruch 2 oder Anspruch 3, bei dem das Mittel so angeordnet ist, daß es mit dem Durch gang (18) so zusammenwirkt, daß eine Venturipumpe gebildet wird, die bewirkt, daß Luft durch den Durchgang (18) vom ersten Abschnitt (27) zum zweiten Abschnitt (26) gezogen wird.

5. Kraftfahrzeug nach Anspruch 4, bei dem der erste Abschnitt (27) ein Kollektorblech mit einer Lippe (27b) umfaßt, die sich um den Umfang der Bremsscheibe (19) erstreckt.

6. Kraftfahrzeug nach Anspruch 4 oder Anspruch 5, bei dem sich der Kühldurchgang (18) vom ersten Abschnitt (27) zum zweiten Abschnitt (26) hin im wesentlichen vertikal erstreckt, so daß Wärme von der Bremsscheibe (19) eine Konvektion im Kühldurchgang bewirken kann.

7. Kraftfahrzeug nach einem der Ansprüche 1 bis 3, bei dem der zweite Abschnitt des Durchgangs einen Kollektordurchgang (240) beinhaltet, der so angeordnet ist, daß Luft in den Durchgang (240) hinein kanalisiert wird, wodurch Luft durch den Durchgang zur Bremsscheibe (219) hin gedrückt wird.

8. Kraftfahrzeug nach einem der Ansprüche 4 bis 6, das weiterhin einen zweiten Kühldurchgang mit einem Kollektordurchgang (240) neben dem Reifen (230) des Rads beinhaltet, der so angeordnet ist, daß Luft in den Durchgang (240) kanalisiert wird, um so Luft durch den Durchgang zur Bremsscheibe (219) hin zu drücken.

9. Kraftfahrzeug nach Anspruch 8, bei dem sich der zweite Kühldurchgang (240) im wesentlichen horizontal erstreckt.

10. Kraftfahrzeug nach einem der vorstehend aufgeführten Ansprüche, bei dem das Kraftfahrzeug eine Aufhängungsstrebe (15, 215) besitzt, an der der Kühldurchgang (18, 218) oder einer der Kühldurchgänge befestigt ist.

## Revendications

1. Véhicule à moteur comprenant au moins une roue (29) pivotant dans un logement de roue (12) défini par une structure de caisse du véhicule à moteur (10), un disque de freinage (19) connecté à la roue (29) pour tourner avec elle, un étrier de disque de freinage (20) pour appliquer un effet de freinage au disque de freinage (19) et un conduit de refroidissement (18) pour refroidir le disque de freinage (19) avec une première partie (27) adjacente au disque de freinage (19),
**caractérisé en ce que**
le conduit de refroidissement (18) a une seconde partie (26) adjacente à un pneumatique (30) formant une partie externe de la roue (29), de sorte que la rotation du pneumatique (30) au-delà de la seconde partie provoque la circulation de l'air dans le conduit (28).

2. Véhicule à moteur selon la revendication 1,
dans lequel
la seconde partie (26) du conduit (18) est adjacente à des moyens définissant un canal (25) de sorte que l'air circulant avec la roue (29) ou le pneumatique (30) traverse le canal (25).

3. Véhicule à moteur selon la revendication 2,
dans lequel
le canal (25) est conique de manière à provoquer l'accélération de l'air le traversant.

4. Véhicule à moteur selon la revendication 2 ou la revendication 3,
dans lequel
le moyen est disposé pour interagir avec le conduit (18) de manière à former une pompe à venturi provoquant l'aspiration de l'air dans le conduit (18), de la première partie (27) jusqu'à la seconde partie (26).

5. Véhicule à moteur selon la revendication 4,
dans lequel
la première partie (27) comprend une plaque collectrice dotée d'une lèvre (27b) s'étendant autour de la périphérie du disque de freinage (19).

6. Véhicule à moteur selon la revendication 4 ou la revendication 5,
dans lequel
le conduit de refroidissement (18) s'étend essentiellement verticalement de la première partie (27) à la seconde partie (26) de sorte que la chaleur du disque de freinage (19) peut provoquer une convection dans le conduit de refroidissement.

7. Véhicule à moteur selon l'une quelconque des revendications 1 à 3,
dans lequel
la seconde partie du conduit comprend un conduit collecteur (240) disposé pour acheminer l'air vers le conduit (240), poussant ainsi l'air à travers le conduit vers le disque de freinage (219).

8. Véhicule à moteur selon l'une quelconque des revendications 4 à 6, ayant en outre un second conduit de refroidissement doté d'un conduit collecteur (240) adjacent au pneumatique (230) de la roue disposé pour acheminer l'air vers le conduit (240), poussant ainsi l'air à travers le conduit vers le disque de freinage (219).

9. Véhicule à moteur selon la revendication 8,
dans lequel
le second conduit de refroidissement (240) s'étend essentiellement horizontalement.

10. Véhicule à moteur selon l'une quelconque des revendications précédentes,
le véhicule à moteur ayant une entretoise de suspension (15, 215) sur laquelle le conduit de refroidissement (18, 218) ou un des conduits de refroidissement est fixé.
